# EUROPÄISCHE PATENTANMELDUNG

(11) **EP 1 098 422 A1**
(43) Veröffentlichungstag der Anmeldung: **09.05.2001**
(21) Anmeldenummer: 99122235.7
(22) Anmeldetag: 08.11.1999
(51) Int. Cl.: H02K 7/02, H02K 7/116, H02J 9/06, H02J 3/30

(54) **Vorrichtung zur unterbrechungsfreien Stromversorgung mit einer elektrischen Maschine und einem Schwungrad**

(71) Anmelder: PILLER-GmbH, 37520 Osterode am Harz (DE)
(72) Erfinder: Gosebruch, Harald Dr., 27283 Verden (DE)
(74) Vertreter: Patentanwälte Rehberg + Hüppe

(57) **Zusammenfassung**

Bei einer Vorrichtung zur unterbrechungsfreien Stromversorgung mit einer einen Rotor (3) aufweisenden, als Motor oder als Generator betreibbaren elektrischen Maschine (2), die ohne Zwischenschaltung eines eine variable Eingangsfrequenz aufweisenden Umrichters mit einer mit Wechselstrom zu versorgenden Last verbindbar ist, mit einem Schwungrad (7), das über eine variable Übersetzung aufweisende Kopplungsmittel an den Rotor (3) angekoppelt ist, und mit Steuermitteln (8) für die Übersetzung der Kopplungsmittel, die die Drehzahl der mit der in dem Schwungrad (7) gespeicherten kinetischen Energie als Generator betriebenen elektrischen Maschine (2) zumindest über einen Drehzahlbereich des Schwungrads (7) konstant halten, weisen die Kopplungsmittel ein unverzweigtes mechanisches Getriebe (5) mit variabler Übersetzung auf.

## Beschreibung

Die Erfindung bezieht sich auf eine Vorrichtung zur unterbrechungsfreien Stromversorgung mit einer einen Rotor aufweisenden, als Motor oder als Generator betreibbaren elektrischen Maschine, die ohne Zwischenschaltung eines eine variable Eingangsfrequenz aufweisenden Umrichters mit einer mit Wechselstrom zu versorgenden Last verbindbar ist, mit einem Schwungrad, das über eine variable Übersetzung aufweisende Kopplungsmittel an den Motor angekoppelt ist, und mit Steuermitteln für die Übersetzung der Kopplungsmittel, die die Drehzahl der mit der in dem Schwungrad gespeicherten kinetischen Energie als Generator betriebenen elektrischen Maschine zumindest über einen Drehzahlbereich des Schwungrads konstant halten. Die elektrische Maschine ist dabei in aller Regel eine Synchronmaschine, die trotz großer Leistungsfähigkeit einen einfachen Aufbau aufweist und zu günstigen Kosten verfügbar ist.

Vorrichtungen zur unterbrechungsfreien Stromversorgung, die allgemein und so auch hier meistens als USV-Anlagen bezeichnet werden, dienen dazu, insbesondere kurzzeitige Ausfälle eines Stromnetzes, welches normalerweise zur Versorgung einer Last mit Wechselstrom verwendet wird, zu überbrücken. Dabei ist es ein bekanntes Konzept, mit Hilfe des Stromnetzes zusätzlich zu der Last eine elektrische Maschine als Motor zu betreiben, die ein Schwungrad auf eine bestimmte Drehzahl bringt und kontinuierlich auf dieser Drehzahl hält. Wenn das Netz ausfällt, kann die in dem Schwungrad gespeicherte kinetische Energie genutzt werden, um die elektrische Maschine als Generator zu betreiben, um die Last mit Wechselstrom zu versorgen. Dabei nimmt die kinetische Energie des Schwungrads und damit seine Drehzahl naturgemäß ab. Bei starrer Ankopplung des Schwungrads an den Generator bedeutet dies, daß ein Umrichter mit variabler Eingangsfrequenz zwischen dem Generator und der Last vorgesehen sein muß, um die Last mit Wechselstrom konstanter Frequenz zu versorgen. Ein solcher Umrichter ist ebenso wie ein Wechselrichter, der einer Gleichstrommaschine als elektrische Maschine nachgeschaltet werden müßte, im besonders interessierenden Mittelspannungsbereich der Größenordnung 10.000 Volt eine komplizierte Einrichtung, wenn er für größere Leistungen, d. h. für größere Ströme ausgelegt werden soll. Aber selbst bei Auslegung für große Leistungen ist er gegenüber Kurzschlußströmen extrem empfindlich.

Es ist daher bekannt, eine Vorrichtung zur unterbrechungsfreien Stromversorgung nach der eingangs beschriebenen Art auszubilden, bei der das Schwungrad nicht starr an den Rotor der elektrischen Maschine angekoppelt ist, sondern über eine variable Übersetzung aufweisende Kopplungsmittel. Bei einer konkreten bekannten unterbrechungsfreien Stromversorgung der eingangs beschriebenen Art der Firma HOLEC/HITEC weisen die Kopplungsmittel eine elektromagnetische Kupplung zwischen der elektrischen Maschine und dem Schwungrad auf. Die elektromagnetische Kupplung erlaubt es, daß sich das Schwungrad abbremst, ohne daß sich die Drehzahl der als Generator betriebenen elektrischen Maschine verringert.

Bei einfachem Aufbau der elektromagnetischen Kupplung ist dies solange möglich, wie die Drehzahl des Schwungrads größer ist als die gewünschte konstante Drehzahl des Generators. Dabei ist in diesem Fall erforderlich, daß das Schwungrad über einen anderen Drehmomentübertragungsweg von der als Motor betriebenen elektrischen Maschine auf eine größere Drehzahl gebracht wird als die Drehzahl der elektrischen Maschine. Wenn die elektromagnetische Kupplung auch eine Aufwärtsübersetzung der jeweils antreibenden Eingangsdrehzahl ermöglichen soll, ist der Aufbau der elektromagnetischen Kupplung selbst und der Aufbau der für ihre Ansteuerung notwendigen Steuermittel besonders aufwendig.

Aus dem Stand der Technik der USV-Anlagen ist es auch bekannt, eine Brennkraftmaschine vorzusehen, um die elektrische Maschine als Generator anzutreiben, wenn ein längerer Stromausfall zu überbrücken ist. Der Rotor der elektrischen Maschine wird mit dem Generator über eine Freilaufkupplung oder eine schaltbare Kupplung verbunden. Wenn der elektrischen Maschine kein Umrichter mit variabler Eingangsfrequenz nachgeschaltet ist, muß die Drehzahl der Brennkraftmaschine bereits die Drehzahl der elektrischen Maschine erreicht haben, bevor sie an die elektrische Maschine angekoppelt werden darf; anschließend muß ihre Drehzahl konstant gehalten werden.

Aus der US-4 278 928 ist eine elektrische Generatoranordnung bekannt, bei der der Eingangswelle eines elektrischen Generators ein Planetengetriebe vorgeschaltet ist. Dabei ist die Eingangswelle des Generators mit dem Sonnenrad des Planetengetriebes verbunden. Der Läufer der Planeten des Planetengetriebes ist mit der Eingangswelle der gesamten elektrischen Generatoranordnung verbunden. Der Zahnkranz des Planetengetriebes kann durch einen hydraulischen Antrieb mit verschiedener Drehzahl angetrieben werden, um das Übersetzungsverhältnis des Planetengetriebes so zu variieren, daß die Drehzahl des Generators auch bei schwankender Drehzahl an der Eingangswelle der gesamten elektrischen Generatoranordnung konstant gehalten wird. Das Hydraulikmedium für den hydraulischen Antrieb wird von Pumpen bereitgestellt, die von der sich auf konstanter Drehzahl befindlichen Eingangswelle des Generators oder einem anderen Teil des Generators angetrieben wird.

Aus der DE-Z Auto, Motor und Sport 21/1999 vom 06.10.1999, Seiten 82 und 84 ist ein stufenloses Getriebe für Kraftfahrzeuge bekannt. Dieses stufenlose Getriebe umfaßt ein mehrere Gänge aufweisendes Automatikgetriebe und ein damit in Reihe geschaltetes mechanisches Getriebe mit variabler Übersetzung, welches als "Variator" bezeichnet wird. Der Variator überbrückt die Übersetzungsunterschiede zwischen den einzelnen Gängen des Automatikgetriebes. Die Funktion des Variators basiert auf einer Laschenkette, die vergleichbar einem Keilriemen zwischen zwei Kegelscheibenpaaren läuft, welche auf einer eingangsseitigen und einer ausgangsseitigen Welle drehfest angeordnet sind. Der Abstand der beiden Kegelscheiben der beiden Kegelscheibenpaare ist synchron veränderbar, so daß die wirksamen Radien der Laschenkette im Bereich der beiden Kegelscheibenpaare unter Beibehalt ihrer Spannung gegenläufig verändert wird. Da das Verhältnis der beiden wirksamen Radien der Laschenkette im Bereich beider Kegelscheibenpaare direkt die Übersetzung des Variators bestimmt, wird so diese Übersetzung mit dem Abstand der beiden Kegelscheiben beider Kegelscheibenpaare stufenlos verändert. Durch die variable Übersetzung des Variators kann der Motor eines Kraftfahrzeugs bei konstanter Drehzahl gehalten werden, während sich die Geschwindigkeit des Kraftfahrzeugs ändert. So ist es beispielsweise möglich, den Motor bei maximaler Leistung oder maximalem Drehmoment zu halten, während die Geschwindigkeit erhöht wird, oder bei maximalem Drehwiderstand, wenn der Motor als Bremse bei der Talfahrt genutzt wird.

Der Erfindung liegt die Aufgabe zugrunde, eine Vorrichtung zur unterbrechungsfreien Stromversorgung der eingangs beschriebenen Art aufzuzeigen, bei der die Kopplungsmittel einen übersichtlichen mechanischen Aufbau aufweisen.

Erfindungsgemäß wird diese Aufgabe dadurch gelöst, daß bei einer unterbrechungsfreien Stromversorgung der eingangs beschriebenen Art die Kopplungsmittel ein unverzweigtes mechanisches Getriebe mit variabler Übersetzung aufweisen. Unter einem unverzweigten mechanischen Getriebe mit variabler Übersetzung ist dabei ein Getriebe zu verstehen, bei dem eine erste Eingangs-/Ausgangswelle mit einer zweiten Eingangs-/Ausgangswelle in festgetrieblichem Kontakt steht, wobei aber die Übersetzung zwischen die beiden Eingangs-/Ausgangswellen variabel ist. Dieser Begriff schließt keine hydraulischen oder elektromagnetischen Drehmomentwandler oder Differenzgetriebe ein. Das unverzweigte mechanische Getriebe dieser Definition hat den Vorteil, daß seine Übersetzung ausschließlich mechanisch definiert und damit vom Grundsatz her leicht steuerbar ist. Weiterhin arbeitet das unverzweigte mechanische Getriebe mit relativ geringen Verlustleitungen. Dies ist beim Einsatz in einer USV-Anlage von besonderer Bedeutung, weil das Getriebe, auch solange kein Ausfall der Netzspannung auftritt, ständig zwischen dem Rotor der elektrischen Maschine und dem Schwungrad mitläuft. Bei einem Netzausfall kann dann durch die Ansteuerung des mechanischen Getriebes über die Steuermittel ohne weiteres sichergestellt werden, daß die aktuelle Übersetzung des mechanischen Getriebes immer genau so groß ist, daß trotz im Betrieb der elektrischen Maschine als Generator abnehmender Drehzahl des Schwungrads immer eine ausreichend konstante Drehzahl der elektrischen Maschine sichergestellt ist. Es versteht sich, daß der Anteil der dem Schwungrad entnehmbaren Rotationsenergie davon abhängt, wie groß die Variabilität der Übersetzung des mechanischen Getriebes ist. Mit aus dem Automobilbau grundsätzlich bekannten mechanischen Getrieben variabler Übersetzung ist es möglich, eine Variabilität der Übersetzung des mechanischen Getriebes von mindestens 30 % ihres Maximalwerts zu erreichen. Bei Optimierung für den neuen Anwendungsbereich sind auch Variabilitäten von mindestens 50 % des Maximalwerts der Übersetzung des mechanischen Getriebes möglich.

Dabei ist es grundsätzlich auch möglich, das mechanische Getriebe mit variabler Drehzahl, wie es aus dem Automobilbau bekannt ist, auch bei der neuen USV-Anlage mit einem mehrere Gänge aufweisenden Automatikgetriebe in Reihe zu schalten. Hierdurch wird zwar der Aufwand für die Kopplungsmittel bei der neuen USV-Anlage erheblich vergrößert, dies bedeutet aber nicht, daß der Energieverlust im Stand-by-Betrieb des Schwungrads nennenswert gesteigert werden muß, wenn beispielsweise beim Erreichen der gewünschten Enddrehzahl des Schwungrads, d. h. bei seiner maximalen Drehzahl, ein besonders reibungsarmer Weg durch das Gesamtgetriebe gegeben ist. Bei der Enddrehzahl ist es sogar möglich, das mechanische Getriebe mit variabler Drehzahl zu überbrücken und nur kraftlos oder überhaupt nicht mitlaufen zu lassen. Das mechanische Getriebe mit der variablen Drehzahl kommt in dieser Konstellation erst dann zum Einsatz, wenn ein Ausfall der Netzspannung zu überbrücken ist und die Drehzahl des Schwungrads beginnt abzunehmen.

Vorzugsweise ist die gesamte Übersetzung zwischen dem Rotor und dem Schwungrad größer als 1:1, d. h. eine echte Übersetzung und keine Untersetzung. Dies trägt dem Faktum Rechnung, daß die in dem Schwungrad gespeicherte Energie von dem Quadrat seiner Drehzahl abhängt. Das heißt, um das Trägheitsmoment des Schwungrads möglichst gut auszunutzen, ist es sinnvoll, das Schwungrad auf eine möglichst hohe Enddrehzahl zu bringen. Beim Entnehmen der Energie aus dem Schwungrad ist ebenfalls der niedrige Drehzahlbereich des Schwungrads weniger interessant, so daß eine Variabilität der Übersetzung zwischen dem Rotor und dem Schwungrad, die bis in den Bereich einer Untersetzung geht, keine großen Vorteile bringen.

Wenn neben dem mechanischen Getriebe mit der variablen Drehzahl auch ein automatisches Getriebe mit mehreren Gängen zwischen dem Rotor und dem Schwungrad vorgesehen ist, ist auch eine schaltbare Kupplung vorzusehen. Diese kann als integrierter Bestandteil einer Getriebeeinheit ausgebildet sein, die auch das mechanische Getriebe mit der variablen Drehzahl und das Automatikgetriebe mit den mehreren Gängen umfaßt.

Wenn nur ein mechanisches Getriebe mit variabler Drehzahl vorgesehen ist, kann auf eine Kupplung zwischen dem Rotor und dem Schwungrad hingegen verzichtet werden, so daß sich ein besonders einfacher Aufbau der Kopplungsmittel ergibt.

Ergänzend zu dem Schwungrad, das mit seiner kinetischen Energie zur Überbrückung kurzzeitiger Stromausfälle vorgesehen ist, kann der Rotor durch eine Brennkraftmaschine antreibbar sein, um längerfristige Stromausfälle zu überbrücken. Dabei kann zwischen dem Rotor und der Brennkraftmaschine eine von den Steuermitteln schaltbare Kupplung vorgesehen sein.

Besonders bevorzugt ist es, wenn zusätzlich aber auch alternativ zu der schaltbaren Kupplung zwischen dem Rotor und der Brennkraftmaschine weitere Kopplungsmittel mit variabler Übersetzung vorgesehen sind, die zum Ausgleich von Drehzahlunterschieden zwischen dem Rotor und der Brennkraftmaschine dienen, insbesondere wenn die Brennkraftmaschine ihre mit der Drehzahl des Rotors übereinstimmende oder zu dieser in einem festen Verhältnis stehende Enddrehzahl noch nicht erreicht hat.

In einer weiterentwickelten Ausführungsform kann bei der Brennkraftmaschine aufgrund der zwischen der Brennkraftmaschine und dem Rotor vorgesehenen weitere Kopplungsmittel mit variabler Übersetzung auf einen Anlassermotor für die Brennkraftmaschine verzichtet werden. Die zum Anlassen der Brennkraftmaschine notwendige Energie wird unter Einstellung einer geeigneten Übersetzung der Kopplungsmittel, die auch hier bevorzugt ein unverzweigtes mechanischen Getriebes sind, von der elektrischen Maschine und damit letztlich von dem Schwungrad bereitgestellt.

Umgekehrt kann, wenn ein Anlassermotor für die Brennkraftmaschine und weitere Kopplungsmittel mit variabler Übersetzung zwischen der Brennkraftmaschine und dem Rotor vorgesehen sind, unter Umständen auf einen zusätzlichen Motor für das Hochfahren der elektrischen Maschine in einen Drehzahlbereich, in dem sie als Synchronmotor betreibbar ist, verzichtet werden.

Es ist auch möglich, zwischen dem Rotor und der Brennkraftmaschine nur eine Freilaufkupplung vorzusehen. In diesem Fall sind ein separater Anlassermotor für die Brennkraftmaschine erforderlich.

Die Erfindung wird im folgenden anhand von Ausführungsbeispielen näher erläutert und beschrieben. Dabei zeigt:
- Figur 1: die prinzipielle Anordnung der Bauteile der neuen Vorrichtung zur unterbrechungsfreien Stromversorgung in einer ersten Ausführungsform,
- Figur 2: den prinzipiellen Aufbau eines mechanischen Getriebes mit variabler Übersetzung zur Verwendung bei der neuen Vorrichtung in zwei Funktionsstellungen,
- Figur 3: die prinzipielle Anordnung der Bauteile einer zweiten Ausführungsform der neuen Vorrichtung zur unterbrechungsfreien Stromversorgung und
- Figur 4: die prinzipielle Anordnung der Bauteile einer dritten Ausführungsform der neuen Vorrichtung zur unterbrechungsfreien Stromversorgung.

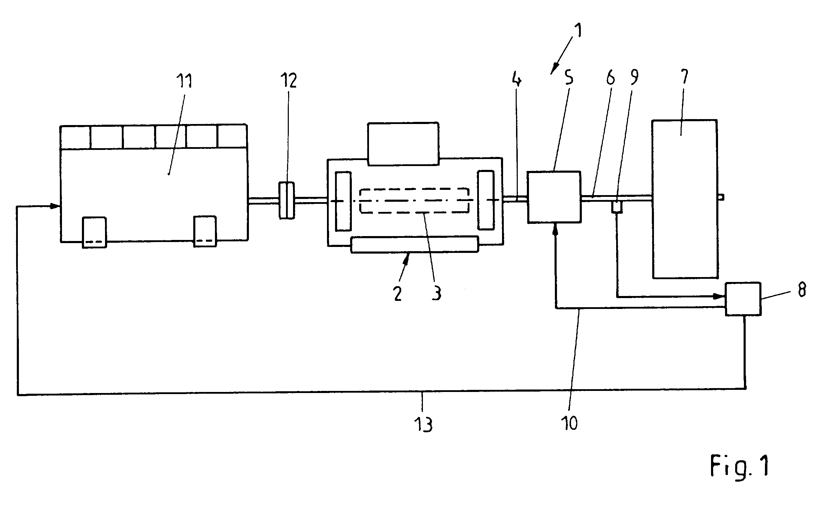

Die in Figur 1 dargestellte USV-Anlage 1 weist eine elektrische Maschine 2 in Form einer Synchronmaschine auf, die als Motor oder als Generator betreibbar ist. Ein Rotor 3 der elektrischen Maschine 1 ist mit einer Eingang-/Ausgangswelle 4 eines unverzweigten mechanischen Getriebes 5 verbunden. Auf einer zweiten Eingangs-/Ausgangswelle 6 des Getriebes 5 ist ein Schwungrad 7 angeordnet. In dem Schwungrad 7 wird kinetische Energie gespeichert, indem es im Betrieb der elektrischen Maschine 2 als Motor auf eine Enddrehzahl gebracht und auf dieser gehalten wird. Die kinetische Energie kann aus dem Schwungrad 7 wieder zurückgewonnen werden, wenn die elektrische Maschine 2 als Generator betrieben wird. Dabei erfolgt der Wechsel der Betriebsarten der elektrischen Maschine automatisch, wenn eine an die elektrische Maschine angeschlossene äußere Wechselspannung, beispielsweise aufgrund eines Netzausfalls zusammenbricht. Der von der elektrischen Maschine 2 in ihrem Betrieb als Generator erzeugt Strom wird typischerweise dazu verwendet, um eine hier nicht dargestellte Last, über Netzausfälle hinweg kontinuierlich mit Strom zu versorgen. Dabei versteht sich, daß die Drehzahl des Schwungrads 7 absinkt, sobald ihm mechanische Energie zum Betreiben der elektrischen Maschine 2 als Generator entzogen wird. Damit nicht gleichzeitig die Drehzahl der elektrischen Maschine 2 und damit die Frequenz der von ihr als Synchronmaschine erzeugten Wechselspannung abnimmt, ist das Getriebe 5 mit der variablen Übersetzung vorgesehen. Eine Steuereinrichtung 8 stellt über einen Sensor 9 die aktuelle Drehzahl des Schwungrads 7 fest und variiert über ein Ausgangssignal 10 die aktuelle Übersetzung des Getriebes 5 derart, daß die Drehzahl der elektrischen Maschine 2 immer denselben Wert beibehält. Dies ist solange möglich, bis die untere Grenze der Variabilität der Übersetzung des Getriebes 5 erreicht ist. Wenn die Variabilität der Übersetzung aber nur 30 % ihres Maximalwerts, bei dem sich das Schwungrad 7 auf seiner Enddrehzahl befindet, beträgt, können bereits über 50 % der in dem Schwungrad 7 gespeicherten kinetischen Energie bei konstanter Drehzahl der elektrischen Maschine 2 zurückgewonnen werden. Wenn die Variabilität 50 % des Maximalwerts der Übersetzung des Getriebes 5 beträgt, können sogar 75 % der gesamten in dem Schwungrad gespeicherten mechanischen Energie auf diese Weise ausgenutzt werden. In jedem Fall ist, falls die äußere Wechselspannung für längere Zeit ausfällt, während die elektrische Maschine 2 als Generator unter Entzug von kinetischer Energie aus dem Schwungrad 7 betrieben wird, eine Brennkraftmaschine 11 zu starten, die hier über eine Freilaufkupplung 12 mit dem Rotor 3 der elektrischen Maschine 2 verbunden ist. Ein entsprechendes Ausgangssignal 13 wird von der Steuereinrichtung 8 abgegeben. Das Ausgangssignal 13 sorgt auch dafür, daß die Brennkraftmaschine 11 letztlich auf der Drehzahl gehalten wird, die der gewünschten Drehzahl der elektrischen Maschine 2 entspricht, so daß sie diese über längere Zeiträume Figur 1 im Stand-by-Betrieb des Schwungrads 7 sind durch die festgetriebliche Kopplung der Eingangs-/Ausgangswellen 4 und 6 über das Getriebe 5 nur gering, zumal in dem Stand-by-Betrieb keine nennenswerten Kräfte über das Getriebe 5 übertragen werden.

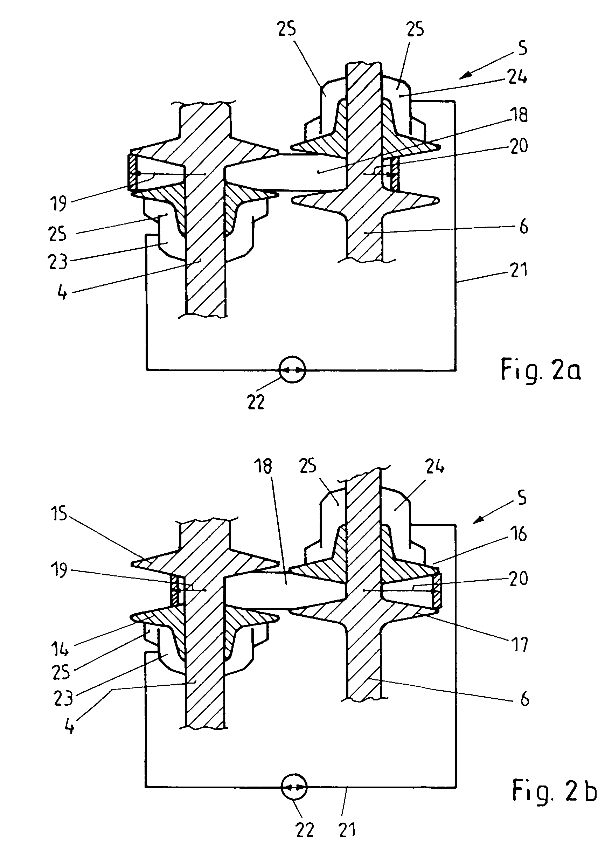

Figur 2a zeigt einen möglichen prinzipiellen Aufbau des unverzweigten mechanischen Getriebes 5 in einer ersten Funktionsstellung, Figur 2b eine entsprechende zweite Funktionsstellung. Dabei entspricht die Funktionsstellung gemäß Figur 2a dem Stand-by-Betrieb des Schwungrads 7 gemäß Figur 1, bei dem eine Übersetzung zwischen der Eingangs-/Ausgangswelle 4 zum Rotor und der Eingangs-/Ausgangswelle 6 zum Schwungrad maximal ist. Das heißt, das Schwungrad dreht sich mit einer vergleichsweise hohen Drehzahl im Vergleich zu dem Rotor der elektrischen Maschine. In der Funktionsstellung gemäß Figur 2b, die dem Zeitpunkt entspricht in dem die kinetische Energie des Schwungrads soweit aufgebraucht ist, daß die Drehzahl der elektrischen Maschine zukünftig nicht mehr konstant gehalten werden kann, ist dieses Verhältnis umgekehrt. Das heißt, die Übersetzung ist minimal und bezogen auf die dargestellten Bestandteile des Getriebes 5 sogar eine Untersetzung. Zwischen diesen beiden Funktionsstellungen ist eine theoretisch unbegrenzte Vielzahl von Zwischenstellungen einstellbar, so daß letztlich die Übersetzung kontinuierlich zwischen ihrem Maximalwert und ihrem Minimalwert veränderbar ist, die durch die beiden Funktionsstellungen gemäß den Figuren 2a und 2b definiert sind. Dabei erfolgt die Momentenübertragung zwischen den beiden Eingangs-/Ausgangswellen über zwei Kegelscheibenpaare, von denen die Kegelscheiben 14 und 15 bzw. 16 und 17 jeweils eines Kegelscheibenpaars drehfest auf einer der Eingangs-/Ausgangswellen 4 bzw. 6 angeordnet sind. Zwischen den Kegelscheibenpaaren 14, 15 und 16, 17 läuft eine Laschenkette 18. Effektive Radien 19 und 20 der Laschenkette 18 um die Eingangs-/Ausgangswellen 4 und 6 werden durch die relativen Abstände der Kegelscheiben 14 und 15 bzw. 16 und 17 der Kegelscheibenpaare festgelegt. Dabei sind die Abstände der Kegelscheiben 14 und 15 bzw. 16 und 17 der beiden Kegelscheibenpaare synchron veränderbar, indem jeweils eine der Kegelscheiben 14 bzw. 16 axial verschiebbar auf der jeweiligen Eingangs/Ausgangswelle 4 bzw. 6 gelagert ist. Um dabei eine gleichsinnige Verschiebung der Kegelscheiben 14 und 16 zu erreichen, unter der eine gewünschte Spannung der Laschenkette 8 beibehalten wird, sind die Bewegungen der verschieblichen Kegelscheiben 14 und 16 hydraulisch miteinander gekoppelt. Das heißt, es sind rückwärtige Zylinderräume vorgesehen, die durch eine hier schematisch angedeutete Leitung 21 miteinander verbunden sind. In der Leitung 21 ist eine Pumpe 22 vorgesehen, die Hydraulikmedium 25 aus dem einen Zylinderraum 23 hinter der Kegelscheibe 14 auf der Eingangs-/Ausgangswelle 4 in den Zylinderraum 24 hinter der Kegelscheibe 16 auf der Eingangs/Ausgangswelle 6 umpumpt, um von der Funktionsstellung gemäß Figur 2a in die Funktionsstellung gemäß Figur 2b zu kommen. Dabei kann zusätzlich, was hier zeichnerisch nicht separat dargestellt ist, der Gesamtdruck des Hydraulikmediums 25 erhöht werden, um die axiale Anpreßkraft auf die Laschenkette 18 und damit das von ihrer schlupffrei zwischen den Eingangs-/Ausgangswellen 4 und 6 übertragbare Drehmoment zu erhöhen. Umgekehrt kann der Druck des Hydraulikmediums 25 abgesenkt werden, um im Stand-by-Betrieb, in dem keine nennenswerten Kräfte über das mechanische Getriebe 5 übertragen werden, die Reibung zwischen der Laschenkette 18 und den Kegelscheibenpaaren 14, 15 und 16, 17 zu reduzieren. Hierdurch wird die auf das mechanische Getriebe 5 zurückgehende Verlustleistung im Stand-by-Betrieb des Schwungrads begrenzt. Es versteht sich, daß das in Figur 2 skizzierte Funktionsprinzip für ein vollständiges mechanisches Getriebe 5 gemäß Figur 1 um Details zu ergänzen ist. Hier kann sich der Fachmann aber vollständig an dem Stand der Technik im Bereich des Automobilbaus orientieren.

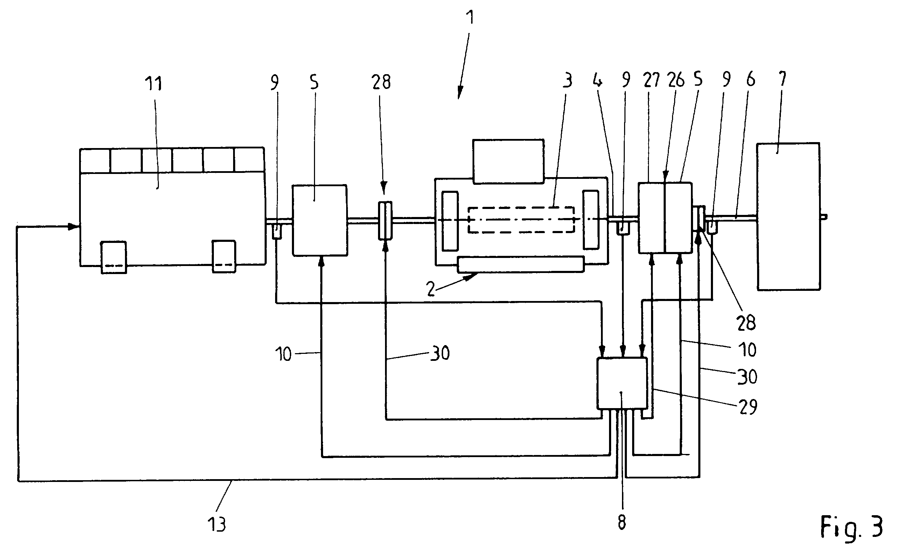

Figur 3 zeigt eine Ausführungsform der USV-Anlage 1, die gegenüber Figur 1 in einigen Details abgewandelt ist. Das mechanische Getriebe 5 ist hier Bestandteil einer Getriebeeinheit 26, in der es mit einem mehrere Gänge aufweisenden Automatikgetriebe 27 sowie einer schaltbaren Kupplung 28 in Reihe geschaltet ist.

Auch das Automatikgetriebe 27 und die Kupplung 28 werden durch Ausgangssignale 29 und 30 der Steuereinrichtung 8 angesteuert. Durch das Automatikgetriebe 27 kann die Übersetzung zwischen der Eingangs-/Ausgangswelle 4 und der Eingangs-/Ausgangswelle 6, d. h. zwischen dem Rotor 3 und dem Schwungrad 7 in noch größeren Bereichen variiert werden, wenn dies gewünscht ist. Dabei ist darauf zu achten, daß mit schnellen Schaltvorgängen in dem Automatikgetriebe 27, mit schnellen entsprechenden Änderungen der Übersetzung des mechanischen Getriebes 5 und mit schnellen Kupplungsvorgängen durch die Kupplung 28 dafür Sorge getragen wird, daß die Versorgung des Rotors 3 der als Generator betriebenen elektrischen Maschine 2 mit kinetischer Energie nicht für relevante Zeiträume unterbrochen wird. Gegebenenfalls ist eine zusätzliche Schwungmasse in direkter Ankopplung an den Rotor 3 vorzusehen, die als Puffer dient. Es ist aber auch denkbar, zwei Schwungräder 7 mit jeweils einer Getriebeeinheit 26 vorzusehen und immer nur eine Getriebeeinheit 26 zu einem Zeitpunkt zu schalten, so daß über die jeweils andere Getriebeeinheit 26 die Energieversorgung des Rotors 3 gewährleistet bleibt. Weiterhin ist die Ausführungsform der USV-Anlage gemäß Figur 3 gegenüber derjenigen gemäß Figur 1 dahingehend ergänzt, daß ein weiteres unverzweigtes mechanisches Getriebe 5 mit variabler Übersetzung auch zwischen der Brennkraftmaschine 11 und dem Rotor 3 der elektrischen Maschine 2 vorgesehen ist. Auch dieses Getriebe 5 wird von der Steuereinheit 8 über ein Ansteuersignal 10 angesteuert. Die Ansteuerung erfolgt dabei so, daß beispielsweise schon beim Hochfahren der Brennkraftmaschine 11 der Rotor 3 angetrieben wird, Schwankungen der Maschine 11 kompensiert werden oder umgekehrt ein Anlassen der Brennkraftmaschine 11 über die elektrische Maschine 2 ermöglicht wird. Dabei ist die Kupplung zwischen der Brennkraftmaschine 11 und der elektrischen Maschine 2 eine schaltbare Kupplung 28, die über ein Ansteuersignal 30 von der Steuereinheit 8 angesteuert wird. Zur optimalen Ansteuerung bzw. optimalen Erzeugung der Steuersignale 10, 13 und 30 liest die Steuereinheit 8 gemäß Figur 3 Ausgangssignale von insgesamt drei Drehzahlsensoren 9 ein, die neben der Eingang-/Ausgangswelle 6 auch auf der Eingangs-/Ausgangswelle 4 bzw. dem Rotor 3 und der Ausgangswelle der Brennkraftmaschine 11 angeordnet sind.

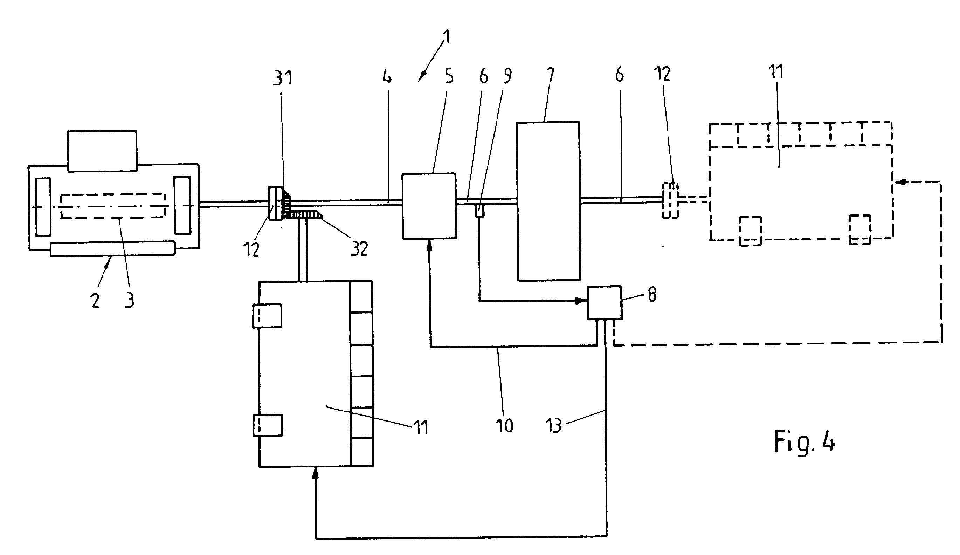

Die Ausführungsform der USV-Anlage 1 gemäß Figur 4 unterscheidet sich von derjenigen gemäß Figur 1 dadurch, daß die elektrische Maschine 2 keine durchgängige Eingangs-/Ausgangswelle 4 aufweist, sondern von herkömmlicher Bauart ist, bei der die Eingangs-/Ausgangswelle 4 nur auf einer Seite aus ihr herausgeführt ist. Entsprechend ist die Brennkraftmaschine 11 über ein Verzweigungsgetriebe 31, 32 an die Eingangs-/Ausgangswelle 4 angekoppelt. Dieses Verzweigungsgetriebe 31, 32 besteht hier aus zwei ineinander eingreifenden Zahnrädern 31, 32 mit senkrecht zueinander verlaufenden Drehachsen, wobei das Zahnrad 31 über die Freilaufkupplung 12 an die Eingang-/Ausgangswelle 4 angekoppelt ist. Das Zahnverhältnis der Zahnräder 31 und 32 kann genutzt werden, um unterschiedliche Nenndrehzahlen zwischen der Brennkraftmaschine 11 und der elektrischen Maschine 2 einzustellen. Im rechten Teil von Figur 4 ist gestrichelt eine weitere Anordnungsmöglichkeit der Brennkraftmaschine 11 angedeutet. Auch hierbei kann eine elektrische Maschine 2 in Standardbauweise zur Anwendung kommen. Allerdings wirkt die gestrichelt dargestellte Brennkraftmaschine 11 nur mittelbar über das Schwungrad 7 auf den Rotor 3 der elektrischen Maschine 2 ein, wodurch das Hochfahren der Brennkraftmaschine 11 in den Drehzahlbereich ihrer Nennleistung, d. h. auf ihre Nenndrehzahl deutlich verzögert wird, wenn die Drehzahl des Schwungrads 7 bereits deutlich abgenommen hat, bevor die Brennkraftmaschine 11 gestartet ist.

**BEZUGSZEICHENLISTE**
- 1 -: USV-Anlage
- 2 -: elektrische Maschine
- 3 -: Rotor
- 4 -: Eingangs-/Ausgangswelle
- 5 -: unverzweigtes mechanisches Getriebe mit variabler Übersetzung
- 6 -: Eingangs-/Ausgangswelle
- 7 -: Schwungrad
- 8 -: Steuereinrichtung
- 9 -: Drehzahlsensor
- 10 -: Ansteuersignal
- 11 -: Brennkraftmaschine
- 12 -: Freilaufkupplung
- 13 -: Ansteuersignal
- 14 -: Kegelscheibe
- 15 -: Kegelscheibe
- 16 -: Kegelscheibe
- 17 -: Kegelscheibe
- 18 -: Laschenkette
- 19 -: Radius
- 20 -: Radius
- 21 -: Leitung
- 22 -: Pumpe
- 23 -: Zylinderraum
- 24 -: Zylinderraum
- 25 -: Hydraulikmedium
- 26 -: Getriebeeinheit
- 27 -: Automatikgetriebe
- 28 -: schaltbare Kupplung
- 29 -: Ansteuersignal
- 30 -: Ansteuersignal
- 31 -: Zahnrad
- 32 -: Zahnrad
- 31,32 -: Verzweigungsgetriebe

## Patentansprüche

1. Vorrichtung zur unterbrechungsfreien Stromversorgung mit einer einen Rotor aufweisenden, als Motor oder als Generator betreibbaren elektrischen Maschine, die ohne Zwischenschaltung eines eine variable Eingangsfrequenz aufweisenden Umrichters mit einer mit Wechselstrom zu versorgenden Last verbindbar ist, mit einem Schwungrad, das über eine variable Übersetzung aufweisende Kopplungsmittel an den Rotor angekoppelt ist, und mit Steuermitteln für die Übersetzung der Kopplungsmittel, die die Drehzahl der mit der in dem Schwungrad gespeicherten kinetischen Energie als Generator betriebenen elektrischen Maschine zumindest über einen Drehzahlbereich des Schwungrads konstant halten, **dadurch gekennzeichnet,** daß die Kopplungsmittel ein unverzweigtes mechanisches Getriebe (5) mit variabler Übersetzung aufweisen.

2. Vorrichtung nach Anspruch 1, **dadurch gekennzeichnet,** daß die Übersetzung des mechanischen Getriebes (5) eine Variabilität von mindestens 30% ihres Maximalwerts aufweist.

3. Vorrichtung nach Anspruch 1 oder 2, **dadurch gekennzeichnet,** daß das mechanische Getriebe (5) mit der variablen Übersetzung mit einem Automatikgetriebe (27) mit mehreren Gängen in Reihe geschaltet ist, wobei die Variabilität der Übersetzung des mechanischen Getriebes (5) ausreichend ist, um die Übersetzungsunterschiede zwischen benachbarten Gängen des Automatikgetriebes (27) vollständig zu überbrücken.

4. Vorrichtung nach einem der Ansprüche 1 bis 3, **dadurch gekennzeichnet,** daß das mechanische Getriebe (5) mit der variablen Übersetzung eine endlose Laschenkette (28) aufweist, die zwischen zwei Kegelscheibenpaaren (14,15 und 16, 17) mit synchron veränderbarem Abstand der Kegelscheiben (14 und 15 bzw. 16 und 17) läuft, wobei das eine Kegelscheibenpaar (14,15) drehfest auf einer Eingangs-/Ausgangswelle (4) des mechanischen Getriebes (5) angeordnet ist, die mit dem Rotor (3) verbunden ist, und wobei das andere Kegelscheibenpaar (16,17) drehfest auf einer Eingangs-/Ausgangswelle (6) des mechanischen Getriebes (5) angeordnet ist, die mit dem Schwungrad (7) verbunden ist.

5. Vorrichtung nach einem der Ansprüche 1 bis 3, **dadurch gekennzeichnet,** daß keine Kupplung (28) zwischen dem Rotor (3) und dem Schwungrad (7) vorgesehen ist.

6. Vorrichtung nach einem der Ansprüche 1 bis 5, **dadurch gekennzeichnet,** daß der Rotor (3) durch eine Brennkraftmaschine (11) antreibbar ist.

7. Vorrichtung nach Anspruch 6, **dadurch gekennzeichnet,** daß zwischen dem Rotor (3) und der Brennkraftmaschine (11) eine von den Steuermitteln schaltbare Kupplung (28) vorgesehen ist.

8. Vorrichtung nach Anspruch 6, **dadurch gekennzeichnet,** daß zwischen dem Rotor (3) und der Brennkraftmaschine (11) eine Freilaufkupplung (12) vorgesehen ist.

9. Vorrichtung nach Anspruch 6, 7 oder 8, **dadurch gekennzeichnet,** daß zwischen dem Rotor (3) und der Brennkraftmaschine (11) weitere Kopplungsmittel (5) mit variabler Übersetzung vorgesehen sind, wobei die jeweilige Übersetzung von den Steuermitteln (8) festgelegt wird.

10. Vorrichtung nach Anspruch 9 soweit nicht rückbezogen auf Anspruch 8, **dadurch gekennzeichnet,** daß die Brennkraftmaschine (11) keinen separaten Anlassermotor aufweist.
